# EUROPEAN PATENT APPLICATION

(11) **EP 2 963 354 A1**
(43) Date of publication of application: **06.01.2016**
(21) Application number: 14425089.1
(22) Date of filing: 03.07.2014
(51) Int. Cl.: F24H 3/06, F23D 11/40

(54) **A hot air generator for a combined heat and power apparatus**

(71) Applicant: Munters Italy S.p.A., 18027 Chiusavecchia (IM) (IT)
(72) Inventor: Barla, Alberto, 12084 Mondovi (Cuneo) (IT); Trifoglio, Fabrizio, 17051 Andora (Savona) (IT); Lesage, Giorgio, 10128 Torino (IT)
(74) Representative: Vanzini, Christian

(57) **Abstract**

Hot air generator (20) for a combined heat and power apparatus, the hot air generator (20) comprising a combustion chamber (23), a burner (21), a combustion gas/air heat exchanger (25), and a fan (28) designed to draw in air via an air inlet (27) of the hot air generator (20) and convey it towards an air outlet (29) of the hot air generator (20), so that the air flows over the combustion chamber (23) and the heat exchanger (25) and is heated, as well as an exhaust gas inlet duct (31), on one side connected to the combustion chamber (23) and on the other side designed to be connected to an exhaust outlet of a heat engine of an electric current generator (10) for conveying the exhaust gas of the heat engine directly into the combustion chamber (23) of the hot air generator (20). A perforated screen (33) is arranged inside the combustion chamber (23), extending around and parallel to a main flame-emission axis (y) of the burner (21), and the exhaust gas inlet duct (31) has a supply mouth (35) directed tangentially with respect to the perforated screen (33) so as to introduce the exhaust gas of the heat engine into the combustion chamber (23) without disturbing the flame generated by the burner (21).

## Description

The present invention relates in general to the sector of heating of industrial and civil environments.

It is known that on building sites it may be required to supply simultaneously hot air and electric energy. In order to satisfy this requirement, hot air generators, which use burners fed with liquid or gaseous fuel, and electric current generators, which use internal-combustion engines coupled to alternators, are usually employed.

The concept of cogeneration, whereby electric energy and useful heat are simultaneously produced in the same plant, thus resulting in thermodynamically efficient use of the fuel, is widely known.

As far as the inventors are aware, however, in the civil site-engineering sector this concept has not yet been widely implemented on a practical level and therefore current generators and hot air generators are generally used as machines which are entirely separate both from the constructional point of view and from the constructional point of view.

One object of the present invention is to provide a hot air generator designed to be able to work in combination with an electric current generator, so as to be able to provide a combined heat and power apparatus.

Another object of the present invention is to provide a combined heat and power apparatus.

In view of these objects, the present invention relates to a hot air generator for a combined heat and power apparatus, the hot air generator comprising a combustion chamber, a burner, a combustion gas/air heat exchanger, and a fan designed to draw in air via an air inlet of the hot air generator and convey it towards an air outlet of the hot air generator, so that the air flows over the combustion chamber and the heat exchanger and is heated, as well as an exhaust gas inlet duct, on one side connected to the combustion chamber and on the other side designed to be connected to an exhaust outlet of a heat engine of an electric current generator for conveying the exhaust gas of the heat engine directly into the combustion chamber of the hot air generator,
wherein a perforated screen is arranged inside the combustion chamber, extending around and parallel to a main flame-emission axis of the burner, and the exhaust gas inlet duct has a supply mouth directed tangentially with respect to the perforated screen so as to introduce the exhaust gas of the heat engine into the combustion chamber without disturbing the flame generated by the burner.

Preferred embodiments of the invention are defined in the dependent claims which are to be understood as forming an integral part of the present description.

Further characteristic features and advantages of the hot air generator according to the invention will become clearer with the following detailed description of an embodiment of the invention with reference to the attached drawings which are provided purely by way of a non-limiting example and in which:
- Figure 1 is a perspective view of a combined heat and power apparatus;
- Figure 2 is a perspective view of the plant shown in Fig. 1 in which a hot air generator is shown sectioned along a vertical plane;
- Figure 3 is a perspective view of the hot air generator according to Fig. 2, sectioned along a horizontal plane;
- Figure 4 is an elevation view of the hot air generator according to Fig. 2, sectioned along a vertical plane;
- Figure 5 is a perspective view of the hot air generator, sectioned along several different planes; and
- Figure 6 is a perspective view of the hot air generator, sectioned along an oblique plane.

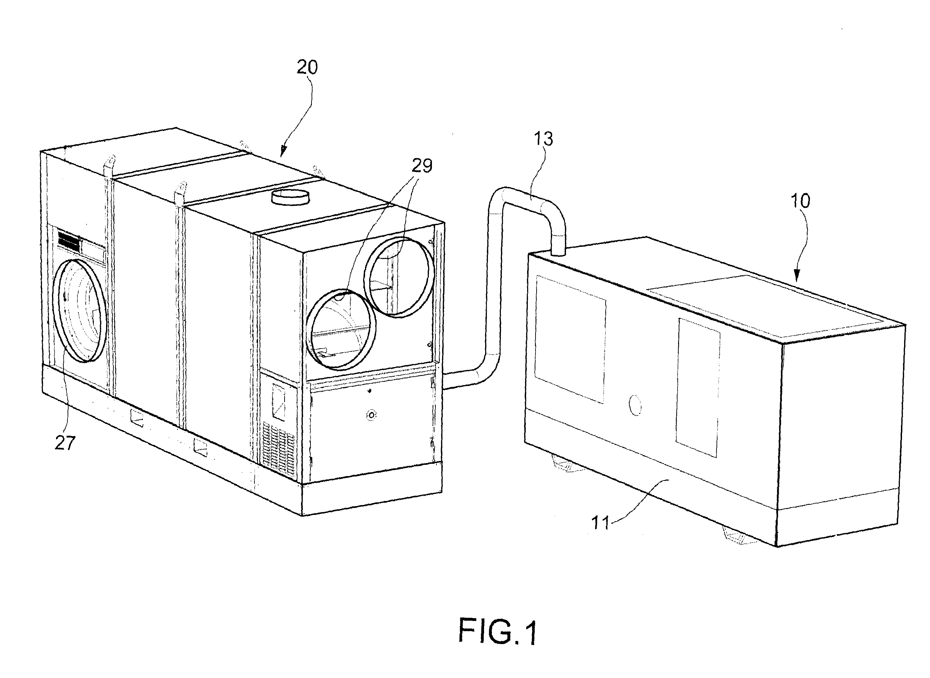

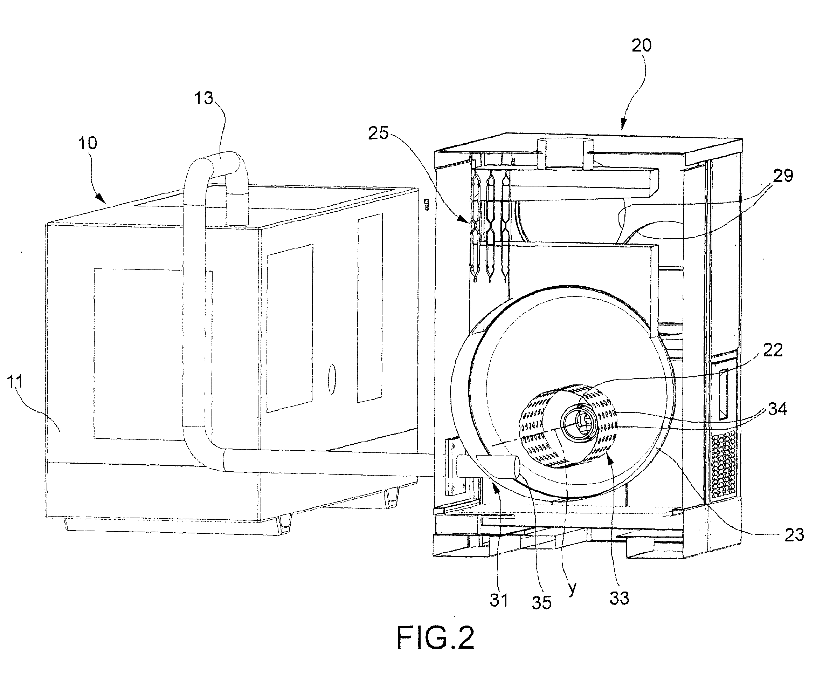

Figures 1 and 2 show a combined heat and power apparatus which may be used on a building site, but which may also be used in other applications.

The plant shown in Figure 1 includes an electric current generator 10 of the type per se conventional and comprising a heat engine (in particular an internal combustion engine, more precisely an Otto cycle or Diesel engine) and an alternator coupled to the heat engine (both not visible in the figures) for producing electric energy by means of the mechanical energy produced by the heat engine. In the example shown, the electric current generator is housed inside a container 11. In other applications, the electric current generator may be housed inside casings of different size and shape. The figures also show an exhaust gas recovery pipe 13 exiting from the electric current generator 10 and connected to an exhaust outlet of the heat engine.

The plant of Figure 1 also comprises a hot air generator 20 which is in fluid communication with the electric current generator 10 via the exhaust gas recovery pipe 13 so as to convey the exhaust gases of the heat engine inside the hot air generator 20, in the manner which will be described below. In the example shown, the hot air generator is housed inside a container. In other applications, the hot air generator may be housed inside casings of different size and shape.

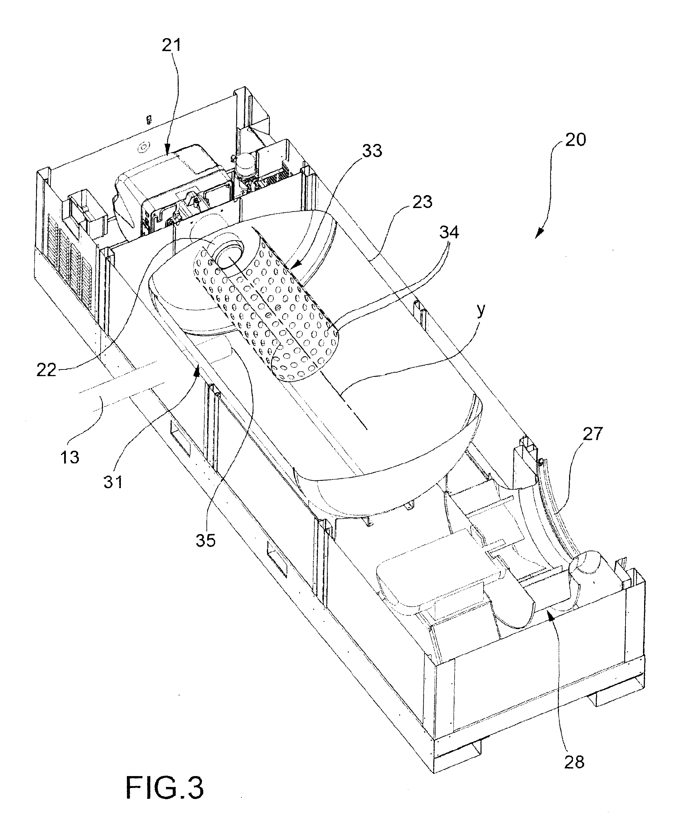

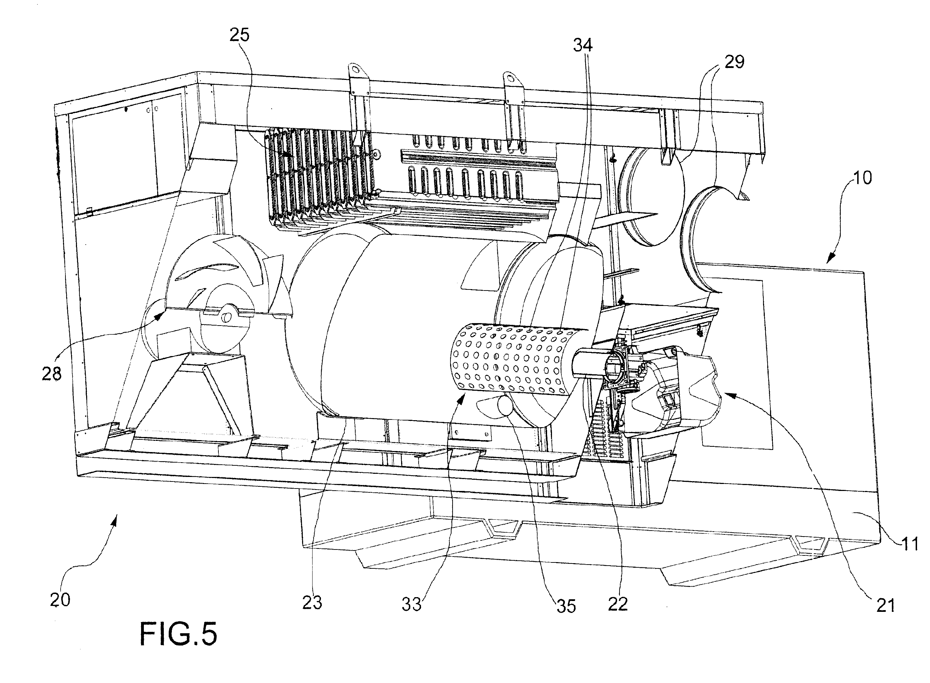

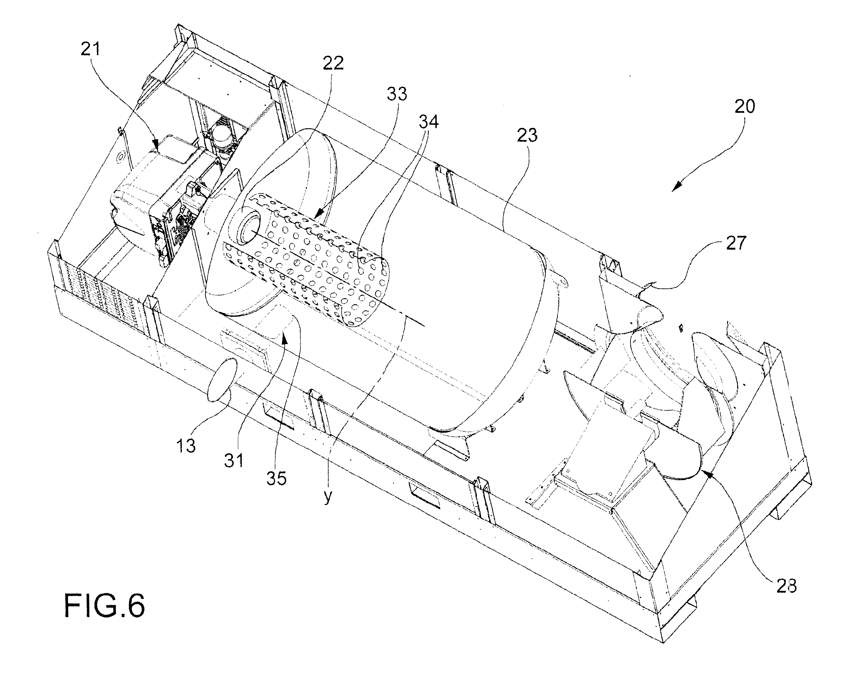

As can be seen in Figures 2 to 6, the hot air generator 20 comprises a liquid or gaseous fuel burner 21, of the blown air type, which mixes a correct amount of fuel dispensed by electrovalves with the oxygen contained in the air introduced by means of a fan (not shown). The figures also show a combustion head 22 of the burner 21 which defines a substantially horizontal, main flame-emission axis y. The gases produced by the combustion inside the combustion chamber 23 associated with the burner 21 are conveyed into a heat exchanger 25 situated above the combustion chamber 23. The combustion products are drawn in by a fan (not shown) and, after they have released their heat to the air into the heat exchanger 25, they are expelled outside through a discharge outlet (not shown).

The air to be heated is drawn in through an air inlet 27 of the hot air generator 20, visible in Figure 1, by means of a fan 28, and forced to flow over the outer surfaces of the combustion chamber 23 and the heat exchanger 25, being heated upon coming into contact with them. The air output by the fan 28 and thus heated is then forced to exit from the hot air generator 20 through one or more air outlets 29. Both the air inlet 27 and the air outlet 29 of the hot air generator 20 may be connected to a conduit for suitable distribution and/or intake of the air to be heated.

The hot air generator 20 also comprises an exhaust gas inlet duct 31 which, on one side, is connected to the combustion chamber 23 and, on the other side, is designed to be connected to the exhaust outlet of the heat engine of the electric current generator 10, via the exhaust gas recovery pipe 13. The exhaust gas inlet duct 31 is therefore designed to convey the exhaust gas of the heat engine directly into the combustion chamber 23 of the hot air generator 20. A flange, or other joining means, is provided on the wall of container of the hot air generator 20, for mechanically connecting the exhaust gas inlet duct 31 to the exhaust gas recovery pipe 13.

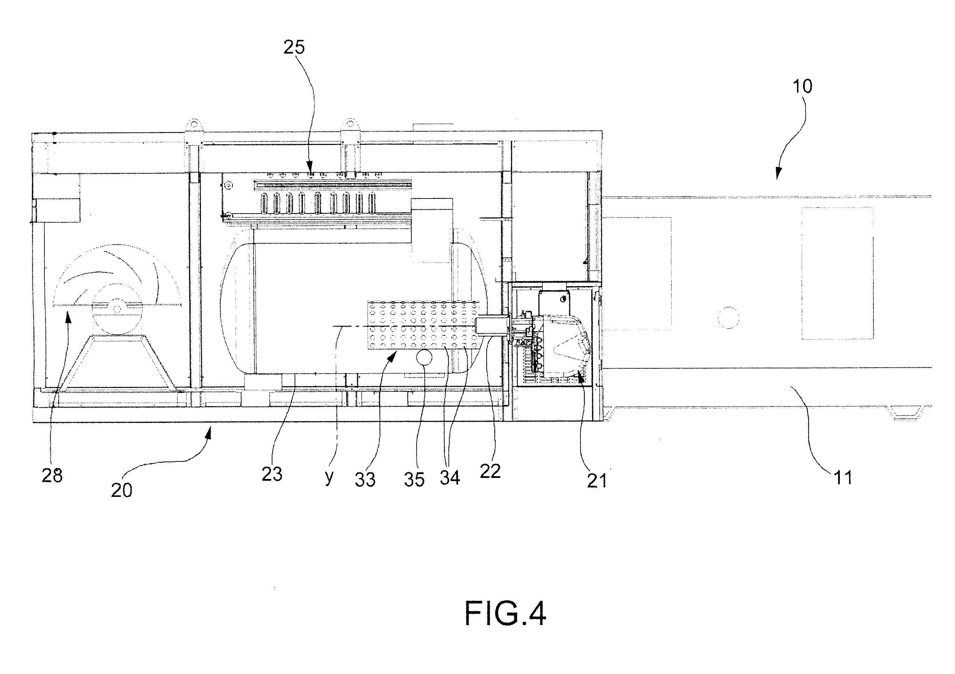

A perforated screen 33 which extends around and parallel to the main flame-emission axis y of the burner 21 is arranged inside the combustion chamber 23. The perforated screen 33 has a cylindrical tubular shape and has a lateral wall in which a plurality of openings or through-holes 34 are provided. This perforated screen 33 has the function of protecting the flame generated by the burner 21 and is made of material suitable for withstanding very high temperatures, for example K41 steel. As can be seen in particular in Figure 4, the exhaust gas inlet duct 31 has a supply mouth 35 directed tangentially with respect to the perforated screen 33; in this way, the exhaust gas inlet duct 31 introduces the exhaust gas of the heat engine into the combustion chamber 23 without disturbing the flame generated by the burner 21. The supply mouth 35 of the exhaust gas inlet duct 31 is directed transversely with respect to the main flame-emission axis y of the burner 21. Moreover, the supply mouth 35 of the exhaust gas inlet duct 31 is arranged at a lower height than the perforated screen 33.

The hot air generator 20, once combined with an electric current generator, allows the thermal energy which normally would be dissipated into the environment by the current generator to be used. The electric current generator converts the energy of the fuel into electric energy; a part of the energy of the fuel is lost in the form of heat emitted by the exhaust gases, another part of the energy is dissipated by the heat engine cooling circuit. In general, if the energy possessed by the fuel burned in the heat engine is taken as being equal to 100, 1/3rd of this energy is converted into electrical energy, 1/3rd is dissipated via the exhaust gases of the heat engine, and 1/3rd of the energy is dissipated via the heat engine cooling circuit.

According to the present invention it is possible to recover the thermal energy, dissipated in the form of heat, of the exhaust gases (which are normally expelled through the exhaust pipe of the heat engine at a temperature in the region of 600°C at full power), these gases being recirculated into the combustion chamber and into the heat exchanger of the hot air heat generator.

Advantageously, it is possible to recover also the thermal energy dissipated by the heat engine cooling circuit by providing a pipe with an auxiliary fan which introduces hot air into the circuit of the hot air generator. The heat engine cooling circuit may be of the forced-air type or with circulation of a liquid which is cooled by a radiator which functions as exchanger between the cooling liquid and the ambient air. An auxiliary fan (should the fan already fitted to the heat engine not be sufficient) would be used to convey the hot air of the cooling circuit into the hot air flow which passes through the heat generator; the hot air produced by the heat engine would then be distributed together with the hot air generated by the heat generator.

According to an alternative embodiment (not shown), the hot air generator and the electric current generator may be incorporated in a single constructional unit and therefore be housed inside the same container, or other kind of casing.

Obviously, without altering the principle of the invention, the embodiments and the constructional details may be greatly varied with respect to that described and illustrated purely by way of a non-limiting example, without thereby departing from the scope of the invention.

## Claims

1. Hot air generator (20) for a combined heat and power apparatus, the hot air generator (20) comprising a combustion chamber (23), a burner (21), a combustion gas/air heat exchanger (25), and a fan (28) designed to draw in air via an air inlet (27) of the hot air generator (20) and convey it towards an air outlet (29) of the hot air generator (20), so that the air flows over the combustion chamber (23) and the heat exchanger (25) and is heated, as well as an exhaust gas inlet duct (31), on one side connected to the combustion chamber (23) and on the other side designed to be connected to an exhaust outlet of a heat engine of an electric current generator (10) for conveying the exhaust gas of the heat engine directly into the combustion chamber (23) of the hot air generator (20).
**characterized in that** a perforated screen (33) is arranged inside the combustion chamber (23), extending around and parallel to a main flame-emission axis (y) of the burner (21), and the exhaust gas inlet duct (31) has a supply mouth (35) directed tangentially with respect to the perforated screen (33) so as to introduce the exhaust gas of the heat engine into the combustion chamber (23) without disturbing the flame generated by the burner (21).

2. Generator according to Claim 1, wherein the supply mouth (35) of the exhaust gas inlet duct (31) is moreover directed transversely with respect to the main flame-emission axis (y) of the burner (21).

3. Generator according to Claim 1 or 2, wherein the main flame-emission axis (y) of the burner (21) and the perforated screen (33) are directed horizontally.

4. Generator according to one of the preceding claims, wherein the supply mouth (35) of the exhaust gas inlet duct (31) is arranged at a lower height than the perforated screen (33).

5. Generator according to one of the preceding claims, wherein the heat exchanger (25) is arranged above the combustion chamber (23).

6. Generator according to one of the preceding claims, further comprising a pipe designed to be connected to an air outlet of a cooling system of the heat engine of the electric current generator (10) so as to add hot air from the cooling system to the air heated by the hot air generator (20).

7. Combined heat and power apparatus, which includes
an electric current generator (10) comprising a heat engine and an alternator coupled to the heat engine, and
a hot air generator (20) according to one of the preceding claims,
wherein an outlet of the heat engine is connected to the exhaust gas inlet duct (31) of the hot air generator (20).

8. Apparatus according to Claim 7, wherein the electric current generator (10) and the hot air generator (20) are incorporated in a single constructional unit.
